# EUROPÄISCHE PATENTANMELDUNG

(11) **EP 3 967 467 A1**
(43) Veröffentlichungstag der Anmeldung: **16.03.2022**
(21) Anmeldenummer: 20000326.7
(22) Anmeldetag: 09.09.2020
(51) Int. Cl.: B27F 1/10

(54) **VORRICHTUNG ZUR AUTOMATISCHEN HERSTELLUNG VON ASTDÜBELN**

(71) Anmelder: Universitatea Stefan cel Mare Suceava - Romania, 720229 Suceava (RO)
(72) Erfinder: GUTT, Gheorghe, Jud. Suceava (RO); DIMIAN, Mihai, Suceava (RO); POPA, Valentin, Suceava, Jud. Suceava (RO)

(57) **Zusammenfassung**

Die Erfindung betrifft eine Vorrichtungen zur automatischen Herstellung von Astdübeln, die zum ästhetischen Zweck dem Ersetzens ausfallender schwarzen Knoten, in geschnittenen Holzrohlingen, bestimmt sind. Die Vorrichtung besteht aus einer Zufuhreinheit (***A***), einer Press- und Entpresseinheit (***B***), einer Antrieb- und Presseinheit (***C***) und eine Steuereinheit (***D***), die durch einfache Operationen auf einer Universaldrehbank zur Metallbearbeitung montiert werden. Die Vorrichtung ist in der Lage, bei hoher Qualität und hoher Produktivität, automatisch und in Serie, aus rohen Astdübeln (**1**) fertige Astdübel (***19***) zu produzieren. Nach der Abmontierung, der erfindungsgemäßen Einheiten der Vorrichtung, von der universalen Drehbank wird ihre ursprüngliche Funktionalität für die Metallbearbeitung vollständig wiederhergestellt.

## Beschreibung

Die Erfindung betrifft eine Vorrichtung, mit einer modularen Struktur, zwecks automatischer Produktion von Astdübeln, auf einer universalen Metalldrehbank, dient.

Das Ersetzen schwarzer ausfallender Knoten in Holzrohlingen mit Astdübeln erfolgt aus ästhetischen Gründen in der Möbelindustrie und in der Holzdekoration. Die jährlichen Wachstumsringe in den Astdübeln, erzeugt aus getrockneten Holzästen bilden zusammen mit den gekrümmten Linien eines Holzrohlinges, Linien die natürlicherweise einen schwarzen Knoten umringen, eine optische Harmonie, die zusammen mit der helleren Farbe der Astdübel, zu einer anderen Ästhetik des veredelten Holzes führen. Dieses bringt seinerseits außer der Einstufung der Holzrohlinge in eine höhere Qualitätsklasse , eine andere Preisklasse.

Weltweit werden Milliarden von Astdübeln verbraucht. Dieses sind, geometrisch gesehen, glatte zylindrische Scheiben mit parallelen Flächen, die aus künstlich getrockneten Holzästen geschnitten werden und eine Dicke zwischen 5 und 9 mm aufweisen. Auf einer der beiden flachen Seiten sind diese Scheiben mit 1x45° radial angefast. Die Dicken der Astdübel sind nicht standardisiert, aber etwa 80% der Bestellungen beziehen sich auf zwei Dicken, nämlich 5 mm und 9 mm. Die Durchmesser sind standardisiert und liegen zwischen 10 mm und 55 mm, wobei die Wachstumsrate von einem Durchmesser zum anderen 5 mm beträgt. Die zulässige Toleranz für den Durchmesser beträgt maximal + 0,2 mm. Die Astdübel müssen aus Ästen derselben Holzart stammen wie die veredelten Holzrohlinge.

Das Ersetzen schwarzer Knoten erfolgt hauptsächlich für die Möbelindustrie aber auch für die Produktion von Holzdekoration. Derzeit werden zu diesem Zweck am häufigsten automatische Fabrikationslinien verwendet. Optische Kameras erkennen das Vorhandensein eines schwarzen Knotens auf den Holzrohlingen die mit einer niedrigen Geschwindigkeit, auf einem Förderband transportiert werden. Mit Hilfe einer entsprechenden Software wird der Durchmesser des Astdübels berechnet der nach dem Ersetzen des schwarzen Knotens dessen Oberfläche vollständig abdecken soll. Dieselbe Technik bewirkt die Drehung eines Frässystems, das mit einem Revolverkopf versehen ist, sodass der Fräser mit dem Durchmesser, der dem zu verwendeten Astdübel entspricht, zum schwarzen Knoten gebracht wird.

Das Frässystem folgt dem Vorschub des Holzrohlings und führt gleichzeitig, mit einem zylindrischen Fräser des Revolverkopfes, das Aushohlen des schwarzen Knotens, bis zu einer Tiefe ensprechend der Dicke des verwendeten Astdübels. Im Folgenden, ohne dass der Längsvorschub des Holzrohlings auf dem Förderband gestoppt wird, bringt die beschriebene Verfolgungs- und Steuertechnik einen Dosierkopf, mit einem spezifischem Klebstoff, über den gefrästen zylindrischen Hohlraum und pumt ein paar Klebstoff Tropfen in den Hohlraum. Als Nächstes dreht ein automatisches System, ausgestatttet mit einem Revolverkopf, dass Magazin mit Astdübeln, derer Durchmesser dem Durchmesser des zylindrisch gefrästen Hohlraumes entspricht, und drückt einen Astdübel in den Hohlraum. Meistens wird nach der Astdübel Korrektur die Oberfläche des Holzrohlings, ohne den Vorschub zu stoppen, gehobelt.

Zur Herstellung von Astdübel sind den Autoren zwei Verfahren bekannt.

Ein Verfahren verwendet getrocknete Holzäste mit Rinde, aus denen Scheiben mit vorbestimmter Dicke manuell oder automatisch mit Kreissägen geschnitten werden. Aus diesen Scheiben werden fertige Astdübel mit einem bestimmten Durchmesser und einer bestimmten Dicke durch Fräsen oder durch Drehen hergestellt. Der Nachteil dieses Verfahrens besteht darin, dass Fräs- und Drehvorgänge für eine Serienproduktion mit hoher Produktivität kaum automatisiert sind, weil die Durchmesser der Scheiben und die Rauheit der Rinde von sehr unterschiedlich sind, das häufig zum Blockieren von automatischen Zufuhrmagazinen führt.

Bei dem anderen Verfahren werden getrocknete Holzstäbe mit einer Länge von etwa tausend Millimetern verwendet, bei denen die Rinde vor dem Trocknen durch Rotationsfräsen entfernt wurde. Nach dem Trocknen werden aus diesen Stäben automatisch Holzscheiben (im folgenden rohe Astdübel benannt) auf vorgegebene Durchmesser und vorgegebene Dicken geschnitten. Aus diesen Rohdübeln werden fertige Astdübel durch automatisches Fräsen oder durch automatisches Drehen hergestellt. Der Vorteil dieses Verfahrens besteht darin, dass alle rohen Astdübel, einen vorbestimmten Durchmesser und eine geringe Rauheit auf der zylindrischen Seite, aufweisen, wodurch dieses Verfahren eine vollständige Automatisierung und eine hohe Produktivität gestattet.

Den Autoren sind keine gegensätzlichen Materialien der Art von Patenten oder wissenschaftlichen Arbeiten bekannt, die sich auf das erste Verfahren zur Herstellung von Astdübel beziehen. In Bezug auf das zweite Verfahren sind den Autoren nur Dokumente wie folgt bekannt:
[1] Gutt Gh, Gutt A, Amariei S., Technologie zur Herstellung von Nadelholzdübeln, Akte OSIM A00202 / 03.04.2017. Die Erfindung beschreibt eine neue Technologie mit hoher Produktivität, die zur industriellen Herstellung von Astdübel aus Nadelholzarten verwendet wird. Im Vergleich zu der klassischen Technologie, die als Rohstoff Nadelholzäste mit Rinde verwendet, das es unmöglich macht, den Herstellungsprozess von Astdübel zu automatisieren, werden bei der erfindungsgemäßigen Technologie zylindrisch gefräste, getrocknete Nadelholzäste, mit konstantem und bekanntem Durchmesser verwendet. Aus diesen Holzstäben werden dann rohe Astdübel geschnitten, die alle den gleichen Durchmesser und die gleiche Dicke aufweisen, dass eine vollständige Automatisierung des Herstellungsprozesses von Astdübeln gestattet.
[2] Gutt G., Gutt A., Gutt S., Alexuc C.,F. - Drehverfahren und die Drehmaschine zur Produzierung von Astdübeln, Akte OSIM 00160/201. Es wird ein Verfahen und eine Drehmaschine mit kleinen Abmessungen beschrieben mit denen Astdübel, augehend von rohen Astdübeln, unter Verwendung eines Drehantriebsystems mit elastischem Druck, erhalten werden.
[3] Gutt G., Gutt A., Gutt S., Zufuhrsystem, Akte OSIM A001058/29.12.2016. Der Patentvorschlag bezieht sich auf ein automatisches Zufuhrsystem einer Drehmaschine zur Verarbeitung von rohen Holzdübeln zu fertigen Astdübeln. Ein Speisemagazin mit rohen Holzdübeln wird regelmäßig, zu festgesetzten Zeiten, in den Bearbeitungsfluss gebracht. Das Magazin besteht aus zwei Körpern und wird durch teilweises Kippen in Richtung der Drehachse durch einen Pneumatikzylinder hin und zurück gependelt.
   Die Autoren haben auch eine Priorität in Bezug auf ein bestimmtes Gerät, zur Herstellung von Astdübel, das an Geräten mit anderen Grundfunktionen angebracht wird. Dieses Gerät ist im Dokument [4] beschrieben:
[4] Amariei S., Gutt Gh., Alexuc C., F. - Vorrichtung zur Herstellung von Astdübel, Akte OSIM A00321 / 10.05 / 2012. Es wird eine Vorrichtung zur Herstellung von Astdübeln beschrieben die an Metall- oder Holzverarbeitungsmaschinen von der Art von Bohrmaschinen und vertikalen Fräsmaschinen angebracht werden kann. Die Vorrichtung ist eine mechanische Struktur mit einer rotierenden Fräse und ist gebildet aus einem Hohlkörper in dessen Inneren sich ein zylindrischer Körper aus Stahl befindet der über eine Druckfeder axial bewegt werden kann. In der ersten Phase des Vorschubs der Vorrichtung in Richtung des rohen Astdübels wird dieser durch den zylindrischen Körper progressiv auf eine statische zylindrische Scheibe festgedrückt. In der zweiten Phase des Absenkens der Vorrichtung berührt die Fräser den rohen Astdübel und beginnt diesen zu fräsen. Nach Abschluss des Fräsvorgans wird die Vorrichtung, durch das vertikale Vorschubsystem der Hauptantriebswelle der Maschine, abgehoben.

Das durch die Erfindung gelöste Problem besteht in einer Vorrichtung, die auf einer Universal Drehbank zur Metallverarbeitung montiert wird und bei hoher Produktivität und Präzision aus rohen Atdübeln die automatische Herstellung von fertigen Astdübeln gewährleistet.

Die in der Erfindung beschriebene Struktur der Vorrichtung, die zur Herstellung von fertigen Astdübeln aus rohen Astdübeln verwendet wird, besteht aus einer Zufuhreinheit, einer Press- und Entpresseinheit, einer Antrieb- und Presseinheit und einer Steuereinheit.

Der Zweck der Zufuhreinheit besteht darin, den Produktionsfluss regelmäßig mit rohen Astdübeln zu sichern. Ihr Bau beinhaltet ein Gravitation Fördermagazin mit rohen Astdübeln dass für jeden zu drehenden Dübel von der Kolbenstange eines Pneumatikzylinders linear in Richtung der Drehachse der Drehmaschine bewegt wird.

Nach dem Positionieren des Fördermagazins auf die Drehachse drückt die Press- und Entpresseinheit den rohen Astdübel, aus der unteren Position des Magazins in Richtung des Dreheisens. Der Längsvorschub erfolgt mithilfe einer zylindrischen Anpressstange aus Stahl linear in Richtung einer rotierenden zylindrischen Antrieb-, Press- und Führungsstange , die zur Antrieb- und Presseinheit gehört. Nach dem ersten Kontakt des rohen Astdübels mit den beiden zylindrischen Stangen fängt sich dieser an zu drehen. Die Fortsetzung seines linearen Vorschubs in Richtung des Dreheisens erfolgt durch die Kolbenstange der Press- und Entpresseinheit.

Nach dem Drehen des geometrischen Profils und dem entsprechenden Durchmesser eines fertigen Astdübels steuert ein elektronisches Zeitrelais ein Elektroventil, das mittels der pneumatischen Press- und Entpresseinheit deren Kolbenstange in ihre Ausgangsposition zurückzieht. Am Ende des Rückhubs der zur Press- und Entpresseinheit gehörenden zylindrischen Stange betätigt diese einen elektrischen Wegbegrenzer, der wiederum ein elektronisches Zeitrelais ansteuert das seinerseits einen neuen Bearbeitungszyklus einleitet. Dieser Zyklus beginnt mit einem neuen Vorschub des Zufuhrmagazines in Richtung der Drehachse. Bevor die Drehachse zentrisch mit der Symmetrieachse des rohen Astdübels liegt wird der fertige Astdübel durch die Außenseite der beiden Aluminiumplatten des Speisemagazines von der gezackten Außenseite des austauschbaren Verschleisskörpers, gehörig zur zylindrischen Antrieb-, und Führungsstange, enfernt und fällt frei in ein SammeImagazin.

Die Steuereinheit regelt die Bearbeitungsschritte für einen rohen Astdübel und überwacht automatisch die Zeiten zwischen den Sequenzen eines Drehzyklusses. Die Steuereinheit wird mit Druckluft und Elektrizität versorgt und befindet sich in einem Schaltkasten der frei auf dem Getriebekörper der Metalldrehmaschine liegt. Die Zufuhreinheit, die Press- und Entpresseinheit sind auf dem Planschlitten des Kreuzsupports des Werkzeugschlittens der Metalldrehbank montiert und die Antrieb- und Presseinheit ist zentrisch und fest im Drehfutter der Metalldrehbank montiert.

Ein Arbeitszyklus für die Bearbeitung eines rohen Astdübels zu einem fertigen Astdübel, mit einer gegebenen Geometrie und standardisierten Abmessungen dauert etwa 3,5 Sekunden, dass eine durchschnittliche Produktivität von 1000 Stück Astdübel pro Stunde gewährleistet.

Die Montage und Demontage der Einheiten der Vorrichtung auf und von der Metalldrehbank erfolgt in ca. 60 -120 Sekunden. Nach der Demontage der Vorrichtung kann die Metallbearbeitung wieder vollständig mit der Metalldrehbank aufgenommen werden.

Ein Arbeitszyklus für die Bearbeitung eines rohen Astdübels zu einem fertigen Astdübel, mit einer gegebenen Geometrie und standardisierten Abmessungen dauert etwa 3,5 Sekunden, dass eine durchschnittliche Produktivität von 1000 Stück Astdübel pro Stunde gewährleistet.

Die Montage und Demontage der Einheiten der Vorrichtung auf und von der Metalldrehbank erfolgt in ca. 60 -120 Sekunden. Nach der Demontage der Vorrichtung kann die Metallbearbeitung wieder vollständig mit der Metalldrehbank aufgenommen werden.

Die Vorteile dder Anwendung der erfindungsmüßigen Vorrichtung besteht in vollautomatischen Arbeitsgängen, einer hohen Produktivität ung Qualität der produzierten Astdübel und in den niedrigen Baukosten der Vorrichtung. Außerdem wird die Universalität einer Metalldrehbank gesteigert, ohne derer Funktionalitüt nach der Abmontierung der Vorrichtung zu beinträchtigen

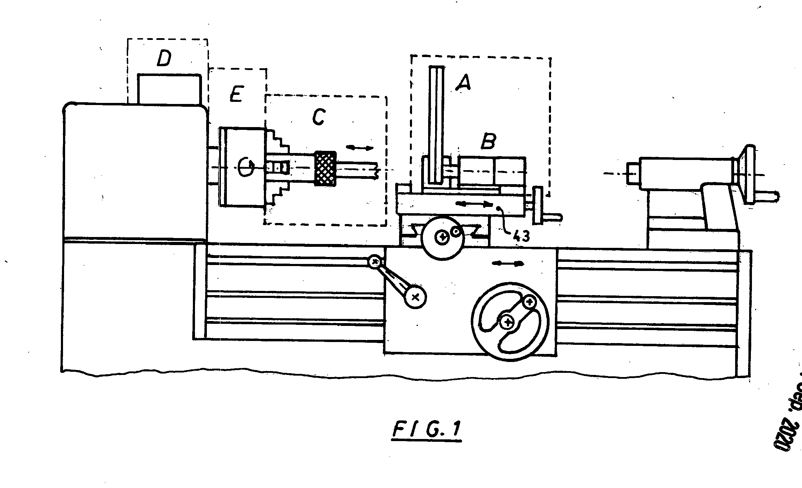

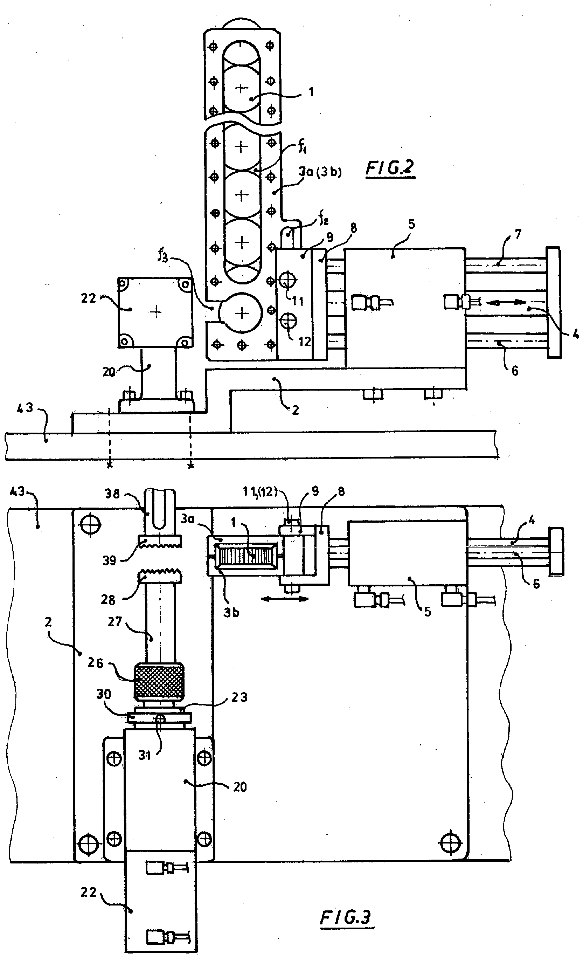

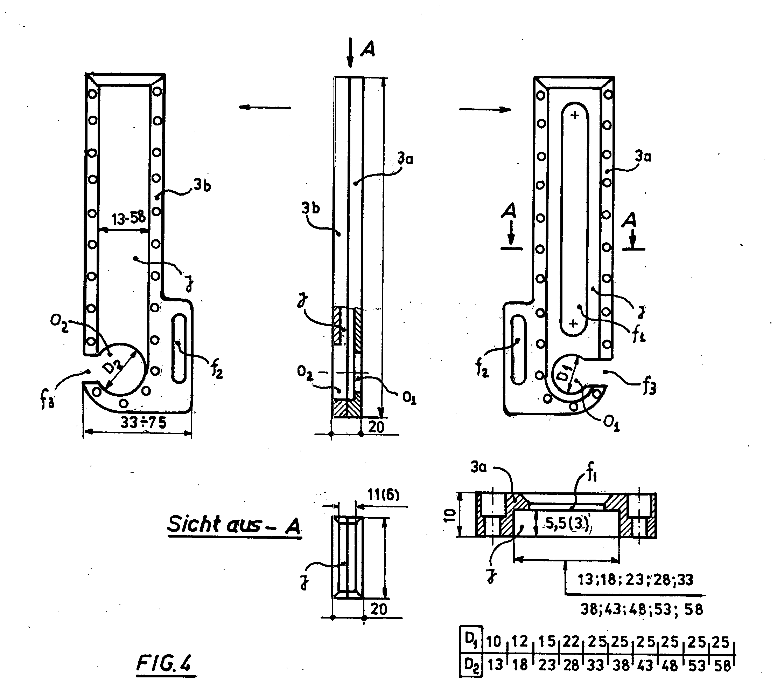

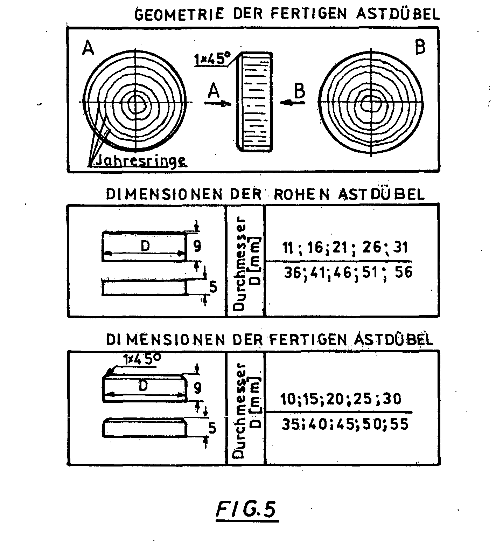

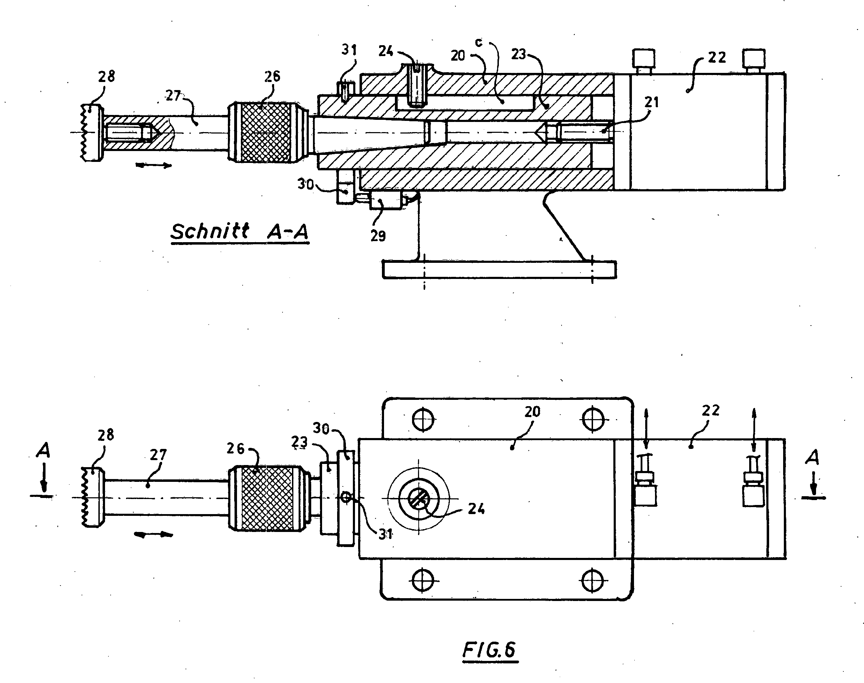

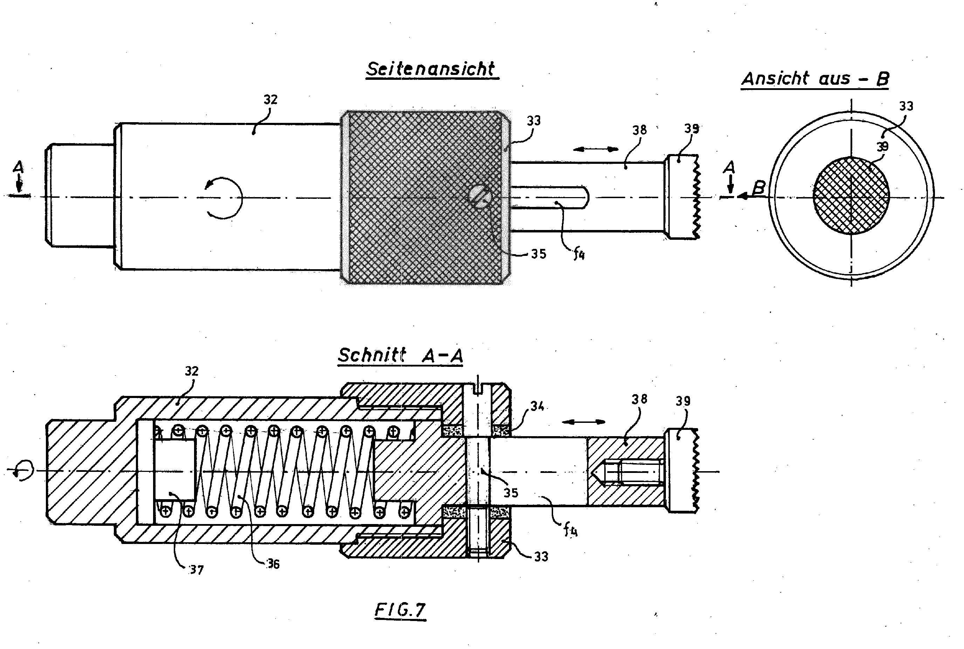

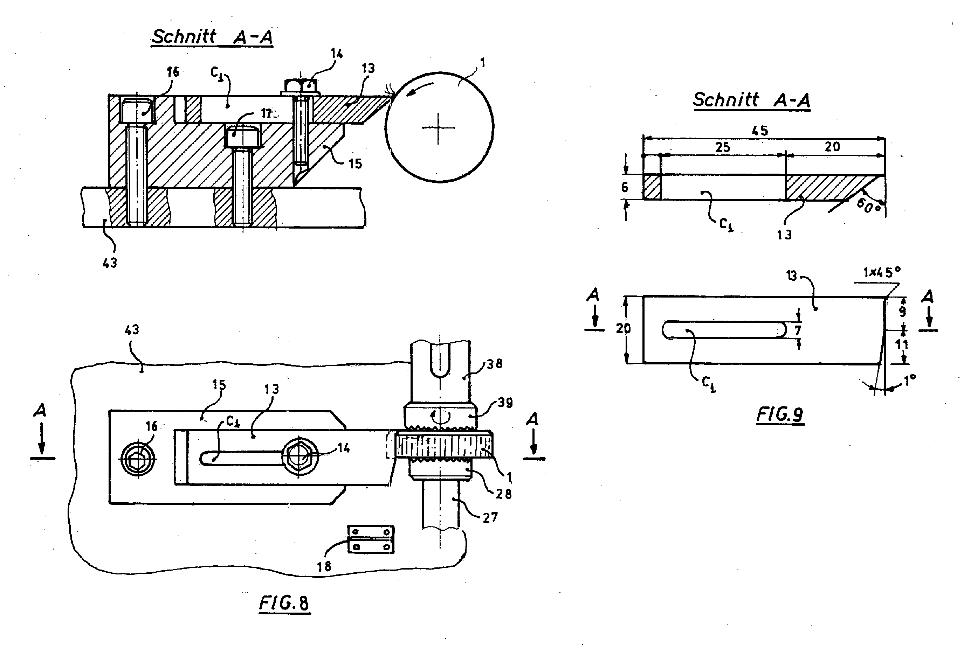

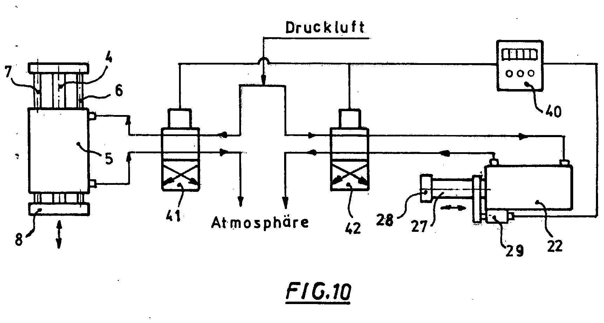

Eine Ausführungsform der Erfindung ist nachstehend in Verbindung mit Fig. 1, Fig. 2, Fig. 3, Fig. 4, Fig. 5, Fig. 6, Fig. 7, Fig. 8, Fig. 9 und Fig. 10 angegeben:
Fig .1- Positionierung der Steuereinheit, der Versorgungseinheit, der Press-/ Entpresseinheit und der Antrieb-/ Presseinheit auf einer Universaldrehmaschine zur Metallbearbeitung;
Fig.2 - Seitenansicht der Press-/ Entpresseinheit;
Fig.3 - Ansicht von oben der Versorgungseinheit und der Press-und Entpresseinheit;
Fig.4 - Ansichten und Abmessungen der beiden Aluminiumkörper, aus denen das Versorgungsmagazin besteht;
Fig.5 - Geometrie und Abmessungen der rohen Astdübel und der fertigen Astdübel Holzoberflächen;
Fig.6 - Ansichten der Press- und Entpresseinheit;
Fig.7 - Ansichten des Antrieb- und Presseinheit;
Fig.8 - Ansichten mit der Positionierung des profilierten Dreheisens;
Fig.9 - Ansichten mit der Geometrie und den Abmessungen des profilierten Dreheisens;
Fig.10 - Pneumatisches Steuerschema.

Die erfindungsgemäße Vorrichtung besteht aus einer Versorgungseinheit ***A*,** einer Press- und Entpresseinheit ***B*,** einer Antrieb- und Presseinheit ***C*,** und einer Steuereinheit ***E***

Die Versorgungseinheit ***A*** mit rohen Astdübeln **1** ist auf einer Trägerplatte **2** aus Stahl montiert und besteht aus einem, für verschiedene Dimensionen der rohen Astdübel **1,** austauschbaren Gravitation Zufuhrmagazin, das wiederum aus zwei mit Schrauben zusammengebauten Aluminiumplatten **3a** und **3b** besteht. Die beiden Aluminiumplatten verfüge über eine gemeinsame gefräste vertikale Führungsrinne ***j*** . für rohe Astdübel **1,** mit einer Dicke von neun Millimetern, beträgt die Führungsrinnenbreite zehn Millimeter und für die Astdübel mit einer Dicke von fünf Millimetern beträgt die Führungsrinnenbreite sechs Millimeter. Sowohl für die neun Millimeter Dicke als auch für fünf Millimeter Dicke der Astdübel ist die zweite Dimension der Rinne mit 1,5 Millimeter größer als der Durchmesser der zu bearbeitenden rohen Astdübels **1** aus dem austauschbaren Zufuhrmagazin, die Rinnenlänge beträgt dreihundert Millimeter. Der Vorschub der in der Führungsrinne j gestapelten rohen Astdübel wird unter derem Eigengewicht geleistet. Am Unterteil des Zufuhrmagazines wird der Vorschub der rohen Astdübels, durch eine kreisförmige Wand ***p*,** die einen mit 1,5 Millimeter größeren Durchmesser hat als der Durchmesser der rohen Astdübels **1** aus dem Zufuhrmagazin, gestoppt. Das Zufuhrmagazin hat am Unterteil, für beide Aluminiumplatten **3a** und **3b,** eine offenes Fenster ***f₃*.** Die Aluminumplatte **3a** weist eine kreisförmige Öffnung ***O₁*** auf, derer Durchmesser um drei Millimeter kleiner ist als der Durchmesser des zu bearbeitenden rohen Astdübels **1,** und die Aluminumplatte **3b** weist eine andere kreisförmige Öffnung ***O₂*** auf, derer Durchmesser um zwei Millimeter mm größer ist als der Durchmesser des zu bearbeitenden rohen Astdübels **1.**

Zusätzlich verfügt die Aluminiumplatte **3a** auch über ein Inspektionsfenster ***f₁*,** längsorientiert, dass sowohl eine visuelle Verfolgung des Vorschubs unter Eigengewicht der rohen Astdübel als auch die manuelle, kurzzeitige Realisierung ihres Vorschubs, unter Verwendung eines Fingers ermöglicht, dann wenn eine Verstopfung der Astdübel in der Rinne ***j*** vorliegt. Gegenwärtig sind für fertige, standardisierte, Holzdübel zehn verschiedene Durchmesser angefangen mit dem Durchmesser von zehn Millimeter, mit steigenden Durchmessern von fünf zu fünf Millimetern, zugelassen. Die Dicke der Astdübel ist nicht standardisiert, es wird aber vorwiegend die Dicke von neun Millimeter und die Dicke von fünf Millimeter bestellt. Zufuhrmagazine sind austauschbar und konstruktiv identisch und haben dieselben Außendimensionen, unterschiedliche Dimensionen haben nur die inneren Führungsrinnen. Ein Zufuhrmagazin wird nur für einen der zehn zugelassene Durchmesser und für eine der verschiedenen Dicken der Astdübel gebaut. Um die vertikale Zentrierung der Symmetrieachse der rohen Astdübel mit der Drehachse zu realisieren , verfügt das Zufuhrmagazin über ein Fenster ***f₂*** mit parallelen Wänden, das in beiden Platten **3a** und **3b** gefräst ist. Die vertikale Einstellung des Vorschubmagazins erfolgt so, dass der Drehpunkt der rohen Astdübel **1** genau auf die Drehachse fällt.

Das Zufuhrmagazin wird durch die zylindrische Pressstange **4** eines doppeltwirkenden Pneumatikzylinders **5,** der ebenfalls noch zwei Zylindrische Führungsstangen **6** und **7** aufweist, linear und horizontal, in Richtung der Drehachse bewegt. Auf der Verbindungsplatte **8** der drei zylindrischen Stangen ist ein Stahlkörper **9** montiert, der auf der linken Seite eine Anpressplatte **10** mit der dieser Stahlkörper durch das Fenster ***f₂*** mit zwei Schrauben **11** und **12** vertikal befestigt und am Ende fest angezogen wird. Ein anderes Fenster ***f₃*** sorgt für den Rückzug des Versorgungsmazines nachdem de rohe Astdübel 1 von der zylindrischen Anpresstange **27** in Richtung der zylindrichen Antrieb-Press- und Fürungsstange **38** aus Stahl gedrückt wird. Ein profiliertes Dreheisen **13,** weist einen Einstellkanal ***c₁*** auf und ist mit einer Schraube **14** am Drehstahlhalter **15** befestigt der seinerseits mit zwei Schrauben **17** und **18** starr am Kreuzsupport **43** der universellen Metalldrehbank montiert ist.

Die Press - und Entpresseinheit **B** ist ebenfalls auf der Trägerplatte **2** aus Stahl montiert und wird verwendet, um die rohen Astdübel **1** aus dem Zufuhrmagazin in Richtung des profilierten Dreheisens **13** zu drücken und nach dem Erhalten eines fertigen Astdübels **19** einen neuen Arbeitszyklus zu starten.

Die Einheit ***B*** besteht aus einem Gusseisenkörper **20** in dem die Kolbenstange **21** eines doppeltwirkenden Pneumatikzylinders **22** eine Pinole **23,** aus Stahl, linear und alternativ in Richtung eines profilierten Dreheisens **13** bewegt. Die Pinole hat einen Führungskanal ***c*** und eine versenkte Schraube **24.** Im konischen Teil der Pinole befindet sich ein austauschbarer Zentrierkonus **25** eines Morse Drehsystems **26** dass am Vorderteil eine rotative zylindrischen Anpressstange **27** aus Stahl besitzt in der ein austauschbarer zackiger Verschleisskörper **28,** aus gehärtetem Stahl verschraubt ist der kleine pyramidenförmige frontale Zacken aufweist. Zur elektrischen Steuerung des Arbeitszyklusses ist auf dem Gusseisenkörper **20** ein elektrischer Wegbegrenzungschalter **29** montiert der durch einen Stahlring **30** betätigt wird und der seinerseits mit einer versenkten Schraube **31** positioniert wird.

Die Antrieb- und Presseinheit ***C*** wird zentrisch un stabil im Drehfutter ***E*** der Metalldrehbank montiert und hat die Aufgabe den mechanischen Drehmoment zu sichern, um durch mechanisches Drehen die Spanung des rohen Astdübels **1** zu sichern und zugleich auf diesen auch einen elastischen Druck auszuüben.

Die Einheit ***C*** besteht aus einem zylindrischen Hohlkörper **32** aus Stahl, der vorne auf einem Abschnitt von etwa **25** mm mit einem Gewinde versehen ist, aus einer gerändelten Mutter **33** mit einer Führungsbuchse **34** aus Bronze, aus einem Antriebsbolzen **35,** aus einer vorgespannte Druckfeder **36,** einem Stütz- und Führungselement **37** für die Druckfeder und aus einer zylindrischen Antrieb-, Press- und Führungsstange **38** aus Stahl, versehen mit einem gefrästen Längsfenster ***f₄*,** zum Gleiten des Antriebsbolzen **35.** Am rechten Ende ist die zylindrische Antrieb-, Press- und Führungsstange **38** aus Stahl mit einem austauschbaren, zylindrischen, zackigen Verschleißkörper **39,** aus gehärteten Stahl, versehen. Die Vorspannung der Druckfeder **36** und der Luftdruck im Pneumatikzylinder **22** müssen so eingestellt werden dass die zylindrische Anpressstange **27** aus Stahl zusammen mit der zylindrischen Antrieb-, Press- und Führungsstange **38** aus Stahl, eine Klemmkraft entwickeln, deren Wert dem Wert Kraft der bei dem Spanen des rohen Astdübels **1** entsteht, leicht überlegen ist. Durch dieses wird verhindert dass während des Drehvorganges ein Ausrutschen des rohen Astdübels **1** zwischen den Verzahnungen der austauschbaren zackigen Verschleißkörpern **28** und **39** verhindert wird. Eine zu hohe Klemmkraft führt wiederum zur möglichen Zerspaltung des rohen Astdübels **1.**

Die Steuereinheit ***D*** liegt frei auf dem Getriebekasten der Metalldrehbank und beinhaltet einen elektrischen Wegbegrenzungschalter **29,** ein elektronisches Zeitrelais **40** und zwei Elektroventile **41** und **42**

Die Arbeitsschritte während der Bearbeitung eines rohen Astdübels **1** zu einem fertigen Astdübel **19** sind wie folgt:
**a)-** Einführung von rohen Astdübeln **1** in das Gravitation Versorgungsmagazin bis zu dessen Befüllung;
**b)-** Starten des Arbeitszyklusses aus der Steuereinheit ***D***
**c)-** Einlassung von Druckluft in dem Pneumatikzylinder **5** durch das Elektroventil **42.** Die Aluminiumplatten **3a** und **3b** des Zufuhrmagazins bewegen sich in Richtung der Drehachse bis sich die Symmetrieachse des rohen Astdübels **1,** gelegen auf der untersten Position des Zufuhrmagazins, sich genau auf Drehachse befindet;
**d)-** Einlassung von Druckluft in den Pneumatikzylinder **22** durch das Elektroventil **41.** Dieses bewegt die zylindrische Anpressstange **27** in Richtung des rohen Astdübels **1** der sich in der untersten Position des Versorgungsmagazins befindet. Nach dem Kontakt der zylindrische Stange **27** mit dem Astdübel und dessen Kontakt mit der rotierenden zylindrische Antrieb-, Press- und Führungsstange **38** aus Stahl, der den Kontakt beginnt die Rotation der des rohen Astdübels **1** zusammen mit der zylindrischen Anpressstange **27.**
**e)-** Drücken und Axialvorschub des in Rotation befindlichen rohen Astdübels **1** durch die zylindrische Anpressstange **27** und durch die zylindrische Antrieb-, Press- und Führungsstange **38** aus Stahl zum Antreiben und Drücken in Richtung des profilierten Dreheisens **13.** Mit dem wachsenden Vorschubweg des rohen Astdübels findet die progressive Kompression der vorgespannten Druckfeder **26** statt;
**f)-** Spanendes Drehen des roh Astdübels **1** und dessen Verwandlung in einen fertigen Astdübel **19;**
**g)-** das elektronische Zeitrelais **40** steuert das Elektroventils **42** an dass seinerseits Druckluft in den Pneumatikzylinder **22** einlässt, das wiederum den Rückzugshub der zylindrischen Anpressstange **27** zusammen mit dem fertigen Astdübel **19** einleitet, wobei das Zurückziehen auch von der zylindrischen Antrieb-, Press- und Führungsstange **38** durch die Entspannung dervorgespannten Druckfeder **26** unterstützt wird.
**h)-** Trennen der zylindrischen Anpressstange **27** vom fertigen Astdübel **19** und Erreichen der anfänglichen Startposition dieser Anpressstange, Position, die zum Starten des elektronischen Zeitrelais **40** mittels des elektrischen Wegbegrenzungsschalte **29** und zum Einleiten eines neuen Arbeitszyklus führt.
**i)-** Wiederholung des Arbeitsschrittes **e.** Bei der Bewegung der Aluminiumplatten **3a** und **3b** des Zufuhrmagazins in Richtung der Drehachse wird der an der Antrieb-, Press- und Führungsstange **38** aus Stahl haftende fertige Astdübel **19** von diesen beiden Platten verschiebt, trennt sich von dem austauschbaren zackigem Verschleißkörper **39** und fällt frei in ein Sammelmagazin.

Bei Anwendung der erfindungsgemäßen Vorrichtung besteht die Aufgabe des Bedieners nur darin, das Zufuhrmagazin mit rohen Astdübeln **1** zu versorgen. Die Montage der Vorrichtung auf eine universal Metalldrehbank besteht lediglich darin die Trägerplatte **2** mit drei Schrauben auf den Kreuzsupport der Drehbank zu montieren und den zylindrischen Hohlkörper **32** der Antrieb-Presseinheit ***C*** in das Drehfutter **E** fest zu spannen.

## Patentansprüche

1. Vorrichtung zur automatischen Herstellung von Astdübeln, die ein Magazin mit Gravitationzufuhr, zwei dopelltwirkende Pneumatikzylinder, einer Druckfeder und eine zylindrische Antriebsstange umfasst, **dadurch gekennzeichnet, dass** die Vorrichtung einen modularen Aufbau aufweist, der aus einer Versorgungseinheit **(*A*)** aus einer Press- und Entpresseinheit (***B***), einer Antrieb- und Presseinheit **(*C*)** und einer Steuereinheit **(*D*)** besteht, welche durch einfache Operationen an eine universal Metalldrehbank montiert werden und in der Lage sind, bei hoher Produktivität und Qualität, automatisch aus rohen Astdübeln **(1),** fertige Astdübel **(19)** herzustellen.

2. Versorgungseinheit **(*A*)** nach Anspruch 1, **dadurch gekennzeichnet, dass** sie ein austauschbares Gravitation Zufuhrmagazin und ein pneumatisches System zur linearen Verschiebung der rohen Astdübel **(1)** in Richtung der kinematischen Drehkette der Drehbank besitzt.

3. Austauschbares Gravitation Zufuhrmagazin nach Anspruch 2, **dadurch gekennzeichnet, dass** Zwecks leichter, konstanter und klemmfreier Versorgung des Drehvorganges mit rohen Astdübeln (1) um alle standardisierten Dimensionen der fertigen Astdübel **(19)** zu produzieren, das Zufuhrmagazin austauschbar ist, und aus zwei, mit Schrauben zusammengebauten, Aluminiumplatten **(3a)** und **(3b)** besteht, die oben einen vergrößerten Versorgungshohlraum **(*c*)** aufweisen, der über eine Führungsrinne **(*j*)** verlängert wird, am unteren Teil einen Hohlraum zum Aufnehmen der rohen Astdübel **(1)** hatt, wobei die Platte **(3a)** ein Inspektionsfenster **(*f₂*),** längsorientiert, besitzt.

4. Vergrößerter Versorgungshohlraum **(*c*)** gemäß Anspruch 3, **dadurch gekennzeichnet, dass** dieser Hohlraum die Form einer stumpfen Pyramide, mit der großen Basis nach oben, und einem Winkel von 45° an der Basis hat.

5. Führungsrinne **(*j*)** nach Anspruch 3, **dadurch gekennzeichnet, dass** sie symmetrisch in vertikaler Position zwischen den Platten **(3a)** und **(3b)** ausgeführt ist, parallele ebene Flächen aufweist und um ein Blockieren des Vorschubs zu vermeiden die kleine Seite des Rinnenabschnitts ein Millimeter größer ist als die Dicke der rohen Astübel **(1)** und die große Seite des Rinnenabschnitts zwei Millimeter größer ist als derer Durchmesser.

6. Hohlraum zum Aufnehmen der rohen Astdübel **(1)** nach Anspruch Nr. 3, **dadurch gekennzeichnet, dass** dieser in der Aluminiumplatte **(3a)** ein kreisförmiges Loch **(*O₁*)** aufweist, dessen Durchmesser drei Millimeter kleiner ist als der Durchmesser der zu bearbeitenden rohen Astdübel **(1),** in der Aluminiumplatte **(3b)** ein weiteres kreisförmiges Loch **(*O₂*)** aufweist, dessen Durchmesser drei Millimeter größer ist als der Durchmesser der zu bearbeitenden rohen Astdübels **(1),** wobei beide Löcher frontal, von einem, in beide Aluminiumplatten **(3a)** und **(3b)** gefrästen offenem Fenster **(*f₃*),** verbunden werden.

7. Versorgungseinheit **(*A*)** nach Anspruch 1, versehen mit einem austauschbaren gravitationellen Zufuhrmagazin nach Anspruch 2, **dadurch gekennzeichnet, dass** Zwecks der schnellen, präzisen und linearen Bewegung des Zufuhrmagazines in Richtung der Drehachse ein doppeltwirkender Pneumatikzylinder **(5)** verwendet wird, der über eine zylindrische Antriebstange **(4)** und zwei zylindrische Führungsstangen **(6)** und **(7)** verfügt, und die, Zwecks der Sicherung der Austauschbarkeit des Versorgungsmagazines auf die Drehachse zu zu sichern, die drei parallelen Stangen des Pneumatikzylinders **(5)** über eine Verbindungsplatte **(8)** aus Stahl und einem Körper **(9)** aus Stahl verfügen, mit derer Hilfe die Position der Aluminiumplatten **(3a)** und **(3b)** vertikal, über das Fenster **(*f₂*)** und den Schrauben **(11)** und **(12),** eingestellt wird.

8. Press- Entpresseinheit **(*B*)** nach Anspruch 1, **dadurch gekennzeichnet, dass** diese die rohen Astdübel, **(1)** in Richtung des profilierten Drehstahles **(*13*)** und die fertigen Astdübel **(19)** von dem Dreheisen in Richtung eines Sammelmagazines bewegt, zu diesem Zweck verfügt die Einheit **(*B*)** über einen doppeltwirkenden Pneumatikzylinder **(*22*),** der in einem Gusseisenkörper **(20)** eine Pinole **(23),** in derer konischem Teil sich ein Morse-Rotationssystem **(26)** mit einer zylindrische Anpressstange **(27)** aus Stahl versehen am Ende mit einem austauschbarem gezacktem Verschleißkörper **(28),** befindet, hin und zurück vom profilierten Dreheisen **(13)** axial bewegt, die Einheit **(B)** verfügt noch über einen Wegbegrenzungsring **(31),** angebracht an der rechten Seite der Pinole **(23)** und der mit einer versenkten Schraube **(24)** positioniert und gesichert ist, der Wegbegrenzungsring **(31)** betätigt seinerseits einen elektrischen Wegbegrenzungsschalter **(29).**

9. Antrieb- und Presseinheit **(*C*)** nach Anspruch **1, dadurch gekennzeichnet, dass** diese zentrisch zwischen den den Backen des Drehfutters **(*E*)** der Metalldrehbank montiert wird und sowohl den Antrieb, der rohen Astdübel **(1)** während des Drehvorganges sichert, als auch, durch eine vorgespannte Druckfeder **(26)** und eine zylindrischen Antrieb-, Press- und Führungsstange **(38)** aus Stahl, einen elastischen Druck auf den zu bearbeitenden rohen Astdübel **(1)** ausübt.

10. Vorgespannte Druckfeder **(26)** nach Anspruch 9, **dadurch gekennzeichnet, dass** um ein Verrutschen des rohen Astdübels **(1)** zwischen den austauschbaren gezackten Verschleißkörpern **(28)** und **(39)** während des Drehvorgangs zu vermeiden die Vorspannung dieser Feder so geregelt wird dass der Wert der Klemmkraft des rohen Astdübels, ausgeübt durch die zylindrische Anpressstange **(27)** und die zylindrische Antrieb-, Press- und Führungsstange **(38),** größer ist als die Schnittkraft die zwischen dem profilierten Dreheisen **(13)** und dem rohen Astdübel **(1)** auftritt.

11. Zylindrische Anpressstange **(27)** aus Stahl, nach Anspruch 8 und Anspruch 10 und und zylindrischen Antrieb-, Press- und Führungsstange **(38)** aus Stahl, nach Anspruch 9, und Anspruch 10, **dadurch gekennzeichnet, dass**, um bei jedem Übergang zu einem anderen fertigen Astdübel **(1),** mit einem gewissen Durchmesser und einer gewissen Dicke den Austausch der beiden Stangen zu vermeiden, sowie um deren Reibungsverschleiß zu reduzieren, haben diese Stangen am Ende ein Gewindebohrung, in der zwei zylindrische, austauschbare, frontale zackige Verschleißkörper **(28)** und **(39),** aus gehärtetem Stahl, verschraubt sind.

12. Profiliertes Dreheisen **(13)** nach Anspruch 8, **dadurch gekennzeichnet, dass**, um ein progressives Drehen der rohen Astdübel (1) während ihres Längsvorschubes sowie um die vorgeschriebene Geometrie und die endgültigen Abmessungen für die fertigen Astdübel **(19)** zu erreichen, hat das Dreheisen **(13)** eine Gesamtbreite, von fünfundzwanzig Millimetern, die in drei Bereiche unterteilt ist, beim ersten Bereich, sechzehn Millimeter breit, hat die Messerklinge einen Winkel von 0,5° zur Drehachse, im zweiten Bereich, acht Millimeter breit, verläuft die Messerklinge parallel zur Drehachse, im dritten Bereich, ein Millimeter breit, hat die Messerklinge Zecks Anfasung des fertigen Astdübels **(19),** einen Winkel von 45° zur Drehachse.

13. Profiliertes Dreheisen **(13)** nach Anspruch 10, Anspruch.11 und Anspruch.12 **dadurch gekennzeichnet, dass** zur Sicherung einer geringen Rauheit der gedrehten Oberfläche des fertigen Astdübels **(19),** in allen drei dimensionalen Bereichen des Dreheisens, die Klinge des profilierten Dreheisens **(13)** eine Neigung von 7°, gegenüber ihrer oberen ebenen Fläche, aufweist und zum Einstellen des Drehdurchmessers, beim Umschalten auf einem anderen Bearbeitungsdurchmesser, zur Sicherung der Maßgenauigkeit der fertigen Astdübel **(19),** und zur Positionierung des Dreheisens nach dem Schärfen, dieses einen Längskanal **(*c₁*)** zum Einstellen der Distanz zur Drehachse, hat.

14. Steuereinheit **(*D*),** nach Anspruch 1, beinhaltet einen elektrischen Wegbegrenzungsschalter **(29),** ein elektronisches Zeitrelais **(40)** und zwei Elektroventile **(41)** und **(42), dadurch gekennzeichnet, dass** diese Einheit die Arbeitsschritte in e inem Drehzyklus, der für einen rohen Astdübel (1) cca drei Sekunden dauert und die automatischen Überwachung der Zeiten zwischen den Arbeitsequenzen durchführt, wobei die Steuereinheit in einem Schaltkasten montiert ist, der frei auf den Getriebekörper der Metalldrehbank liegt und von außen mit Druckluft und Elektrizität versorgt wird.
